# EUROPEAN PATENT APPLICATION

(11) **EP 2 525 182 A2**
(43) Date of publication of application: **21.11.2012**
(21) Application number: 10843269.1
(22) Date of filing: 29.09.2010
(51) Int. Cl.: F28F 3/12, B21D 53/00

(54) **HEAT EXCHANGER, A FOOD HANDLER INCLUDING THE HEAT EXCHANGER, AND A MANUFACTURING METHOD OF THE HEAT EXCHANGER**

(30) Priority: 14.01.2010 KR 20100003611
(71) Applicant: Woongjin Coway Co., Ltd., Gongju-si Chungcheongnam-do 314-895 (KR)
(72) Inventor: SIM, Sang Gu, Goyang-si Gyeonggi-do 412-220 (KR); PARK, Chan Jung, Seoul 151-919 (KR); KIM, Sung Jin, Masan-si Gyeongsangnam-do 631-110 (KR)
(74) Representative: Kador & Partner
(86) International application number: PCT/KR2010/006649
(87) International publication number: WO 2011/087203

(57) **Abstract**

Provided are a heat exchanger, a food handler including the heat exchanger, and a manufacturing method of the heat exchanger. The heat exchanger comprises a main body wherein the plurality of flow channels passes through the inside of the heat exchanger in a first direction and a pair of cover members which is fastened to both ends of the main body in the first direction. The plurality of flow channels is composed of a first flow channel which functions as the path for a first flowing fluid which goes in and out through the cover members and a second flow channel which is connected to the side of the main body. Thermal exchange is performed between the first flowing fluid and the second flowing fluid in the direction wherein the first and second flowing fluids cross each other inside of the main body.

## Description

### BACKGROUND OF THE INVENTION

### Field of the Invention

Exemplary embodiments of the present invention relate to a heat exchanger, a food handler including the heat exchanger, and a method of manufacturing the heat exchanger; and, particularly, to a heat exchanger in which a plurality of flow channels are formed therein by an extruding and cutting process and heat transfer occurs between the flow channels to simplify a working process, and a food handler including the heat exchanger, and a method of manufacturing the heat exchanger.

### Description of the Related Art

In general, a heat exchanger is used to transfer heat from a fluid having high temperature to a fluid having low temperature via a heat transfer wall. The most common structure of a heat exchanger includes a metal tube serving as the heat transfer wall. There are various types of heat exchangers such as a water injection type, a double-pipe type, a finned multi-tube type, and a shell and tube type. The double-pipe heat exchanger consists of an inner tube and an outer tube, in which heat transfer occurs between a fluid in the inner tube and a fluid existing in a U-shaped portion which is positioned between the inner tube and the outer tube. The double-pipe heat exchanger has a simple construction, but its ability to transfer heat is limited.

As a high-performance heat exchanger, the shell and tube heat exchanger consists of a large shell with a bundle of tubes inside it. The design of the heat exchanger may include a parallel-flow arrangement in which hot and cold fluids move in the same direction, a counter-flow arrangement in which hot and cold fluids move in the opposite direction, and a cross-flow arrangement in which fluids move in cross flow. Heat transfer mediums widely used in the industries include water, vapor, air, combusted gas, oil, mercury, sodium, potassium, and Dowtherm which is a mixture of biphenyl and diphenyl oxide.

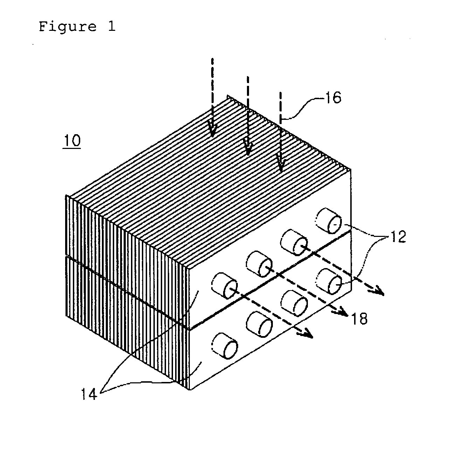

The configuration of a plate fin heat exchanger is described with reference to Fig. 1. A plate fin heat exchanger 10 includes hollow circular tubes 12 and plate fins 14 in which the circular tubes 12 are inserted and fixed. A hot fluid flows in the circuit tubes 12 (see reference numeral 18), and the plate fins 14 closely fixed to the circuit tubes 12 are stacked at regular intervals along an axial direction of the circular tubes 12.

Explaining the operation of the plate fin heat exchanger 10, the heat of high temperature in the circular tubes 12 is dispersed to the plate fins 14 through a thermal diffusion process. In this state, cooling air 16 having low temperature flowing to the plate fins 14 cools the plate fins 14, thereby continuously performing the heat transfer function.

Meanwhile, in the plate fin heat exchanger 10, heat transfer efficiency is determined depending upon the fitting degree of the circular tube 12 to the plate fin 14. The circular tubes may be deformed at the time of fitting or using according to the thickness of the plate fin 14, thereby deteriorating the quality. In addition, since the cross area of a flow passage of the circular tube 12 is generally small, the pressure load of the hot fluid flowing in the circular tube is significant, so that a high-pressure pump or a high-pressure blower fan is required. In order to overcome the above-described problem, a method of a heat exchanger with increased number of circular tubes 12 in order to decrease a pressure load has been proposed. The method has a drawback of increasing processing costs and ultimately manufacturing costs.

### SUMMARY OF THE INVENTION

The present invention has been made to solve the above-described problems, and an object of the present invention is to provide a heat exchanger in which a body including a plurality of flow channels which are formed therein by extruding and cutting a metal shaped member, and a cover member attached to the body, are combined, thereby simplifying the working process and lowering manufacturing costs, and a food handler including the heat exchanger, and a method of manufacturing the heat exchanger.

Other objects and advantages of the present invention can be understood by the following description, and will become apparent with reference to the embodiments of the present invention. Also, it will be obvious to those skilled in the art to which the present invention pertains that the objects and advantages of the present invention can be realized by the means as claimed and combinations thereof.

According to one aspect of the present invention, a heat exchanger is provided, in which a heat transfer between a plurality of flowing fluids occurs, including a plurality of flow channels extending in a different direction so that the plurality of flowing fluids flows in a different direction.

The flow channel may have a first flow channel serving as a passage for a first flowing fluid, and a second flow channel serving as a passage for a second flowing fluid, and the heat transfer may occur between the first flowing fluid and the second flowing fluid in the cross direction in the heat exchanger.

The first flow channel and the second flow channel may be alternatively disposed in the body.

The heat exchanger further includes a pair of cover members which is fastened to both ends of the body in the first direction. The first flow channel may serve as a passage of the first flowing fluid, which passes through the cover member, in the first direction.

The first and second flow channels may be formed in the body in the first direction by an extruding process.

The first or second flow channel may be provided with a heat exchange fin with a predetermined shape protruding from the flow channel.

The heat exchange fin may be oppositely disposed in a staggered manner on an inner surface of either the first or second flow channel which is provided with the heat exchange fin.

The second flow channel may be formed to communicate with a lateral surface of the body by a cutting process.

The cover member can prevent the second flowing fluid, which flows through the second flow channel from the lateral surface of the body, from being discharged from the body in the first direction.

According to another aspect of the present invention to achieve the above-described object, there is provided a method of manufacturing the heat exchanger set forth in the above-described invention, including: extruding a body so that some of the plurality of flow channels in any one direction are formed to have a different height; cutting a lateral surface of the body in a direction different from the direction of the flow channel by a depth until a distal end of the flow channel having the different height is exposed outward; and attaching a cover member to both ends of the flow channel having the exposed distal end.

According to still another aspect of the present invention to achieve the above-described object, there is provided a food handler including the heat exchanger set forth in the above-described invention, wherein heat transfer occurs between exhaust gas generated from a drying oven of the food handler and cold air supplied from an exterior flow in the heat exchanger.

According to still another aspect of the present invention to achieve the above-described object, there is provided a food handler including the heat exchanger manufactured by the method.

With the configuration described above, the present invention is characterized in that as the flowing fluids having thermal energy of the different temperatures flow in the flow channels formed in the body in the cross or perpendicular direction, the heat transfer can occur effectively. Further, the heat exchanger can be rapidly manufactured with a simple method employing the above-described simultaneous extruding process, the process of cutting the upper and lower ends of the body, and the process of attaching the cover member to the front and rear surfaces of the body when the body is formed, thereby improving its productivity and thus reducing the cost of manufacturing.

### BRIEF DESCRIPTION OF THE DRAWINGS

The accompanying drawings, which are included to provide a further understanding of the invention and are incorporated in and constitute a part of this invention, illustrate embodiment(s) of the invention and together with the description serve to explain the principle of the invention. In the drawings:

Fig. 1 is a perspective view illustrating a configuration of a heat exchanger of the related art.

Fig. 2 is a perspective view illustrating a configuration of a heat exchanger according to one embodiment of the present invention.

Fig. 3 is a perspective view illustrating a state in which a body, which is a constitutional element of the heat exchanger according to the present invention, is formed by an extruding process.

Fig. 4 is a perspective view illustrating a state in which second flow channels formed in the body by a cutting process of a lateral surface of the body is exposed from the lateral surface of the body.

Fig. 5 is an exploded perspective view illustrating a state in which a pair of cover members is engaged with front and rear surfaces of the body.

Fig. 6 is a front view when seen from direction A in Fig. 4.

Fig. 7 is a plan view when seen from direction B in Fig. 4.

Fig. 8 is a cross-sectional view taken along the line C-C in Fig. 4.

Fig. 9 is a cross-sectional view taken along the line D-D in Fig. 4.

### DETAILED DESCRIPTION OF THE PREFERRED EMBODIMENT

The above and other objects, and new features of the present invention will be more apparent from the following description taken in conjunction with the accompanying drawings. A heat exchanger, a food handler including the heat exchanger, and a method of manufacturing the heat exchanger will now be described in detail with reference to the accompanying drawings.

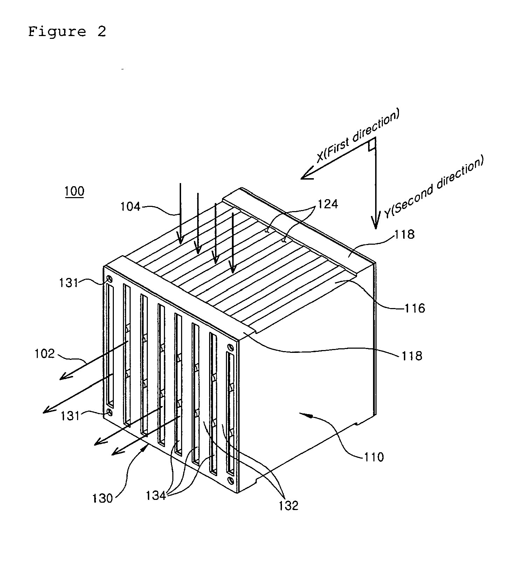

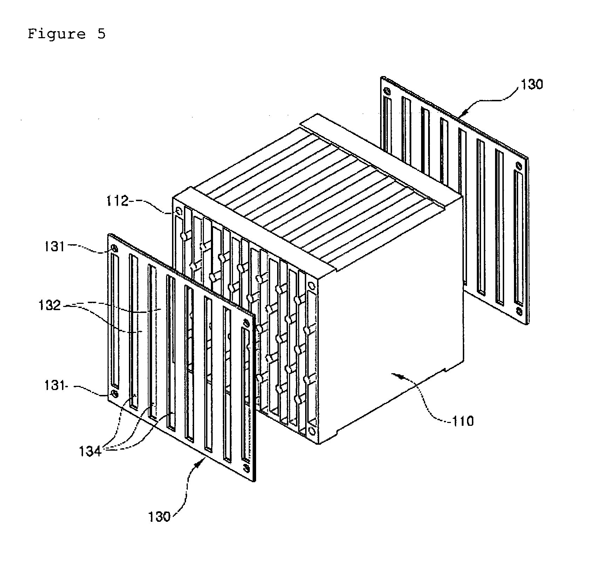

The configuration of a heat exchanger 100 according to one embodiment of the present invention will be described with reference to Figs. 2 to 5. The heat exchanger 100 includes a body 110 having a plurality of flow channels 120 formed therein, and a pair of cover members 130 fastened to both ends of the front and rear surfaces of the body 110. Fastening grooves 112 formed in corner portions of the front and rear surfaces of the body 110 are provided to correspond to fastening holes 131 formed in corner portions of the cover member 130, so that the fastening grooves 112 are engaged with the fastening holes 131 by separate fastening members (not illustrated).

The body 110 is made of single piece which can be made by an extruding process, and has the same cross section at any point in a longitudinal direction thereof. The body is provided as a product of a desired shape by the extruding process within a short time.

The plurality of flow channels 120 have first flow channels 122 serving as a passage for a first flowing fluid passing through the cover member 130, and second flow channels 124 serving as a second flowing fluid and selectively communicating with a lateral surface of the body 110. In Fig. 2, a moving direction of the first flowing fluid passing the front and rear surfaces of the body is referred to as a first direction 102, and a moving direction of the second flowing fluid passing upper and lower ends of the lateral surface of the body is referred to as a second direction 104. The first direction is set as an X-axis on a rectangular coordinate system, and the second direction is set as a Y-axis. The first and second directions are set to be perpendicular to each other for convenience, but the direction setting is not limited thereto.

The first flowing fluid flows in the rear surface of the body 110 in the first direction 102, and flows out from the front surface of the body 110 via the first flow channels 122. The flow of the first flowing fluid is not interrupted by the cover member 130 in the above process.

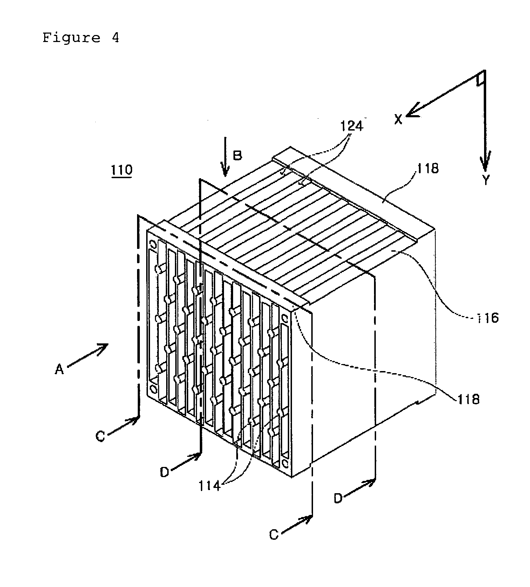

The second flowing fluid flows in the upper end of the lateral surface of the body 110 in the second direction 104, and flows out from the lower end of the lateral surface of the body 110 via the second flow channels 124. The communication of the upper and lower ends of the lateral side of the body 110 and the second flow channels 124 is achieved by a process of cutting the upper and lower ends of the lateral side of the body 110. Referring to Fig. 4, the body 110 is provided on both sides thereof with a constant stepped portion which is formed by the above cutting process. The stepped portion means a height difference between a machined surface 116 which is subjected to the cutting process, and a non-machined reference surface 118. The second flow channels 124 are exposed to both sides of the body 110 due to the stepped portion.

The cover member 130 prevents the second flowing fluid from being discharged from the front surface of the body 110. This is achieved by forming a configuration in which the cover member 130 closes the portion of the second flow channels 124 which communicate with the front and rear surfaces of the body 110.

The cover member 130 is provided with through-holes 134 through which the first flowing fluid entering the body 110 in the first direction 102 flows. These through-holes 134 are formed by a process of piercing a metal plate using a press machine. A shield portion 132 formed between the through-holes 134 prevents the second flowing fluid from being leaked from the front and rear surfaces of the body 110. Since a sealing member (not illustrated) is attached to the inner surface of the cover member 130, it is possible to prevent the flowing fluid from being leaked in the case in which the cover member 130 is brought in close contact with the body 110.

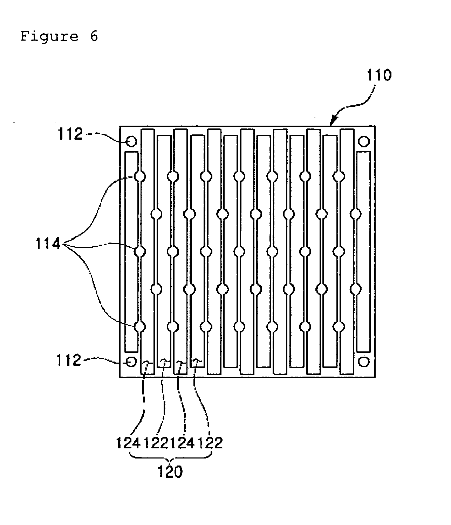

The first flow channels 122 and the second flow channels 124 are alternatively and continuously disposed in the body 110, as illustrated in Fig. 6. That is, since the second flow channels 124 are disposed on both adjacent sides of the first flow channels 122, the heat transfer can smoothly occur between the first flowing fluid flowing in the first flow channels 122 and the second flowing fluid flowing in the second flow channels 124. A plurality of heat exchange fins 114 of a predetermined shape are formed between the flow channels 120 to enhance the heat exchange performance between the first and second flowing fluids.

The heat exchanger 100 according to the present invention can be applied to all apparatuses in which the heat exchange or distribution should be performed, and more particularly, to a heat exchanger for a food handler. In the food handler, hot and humid exhaust gas generated from a drying oven in which food garbage is ground and dried, and cold air supplied from the exterior, flow in the flowing channels 120 of the heat exchanger 100 in a cross direction to exchange the heat.

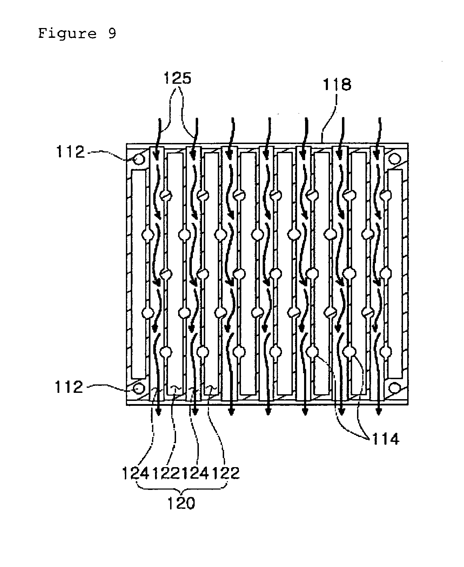

In particular, referring to Fig. 9, the second flowing fluid entering the second flow channels 124 in the second direction 104 flows in a streamlined way due to the presence of the heat exchange fins 114, so that the second flowing fluid comes in contact with the surface of the second flow channels 124. This increases mobility of the heat through heat conduction between the flowing channels 120. In order to support the streamlined movement of the second flowing fluid, the heat exchanger fins 114 are formed in a staggered pattern on both sidewalls of the second flow channels 124 in the second direction 104.

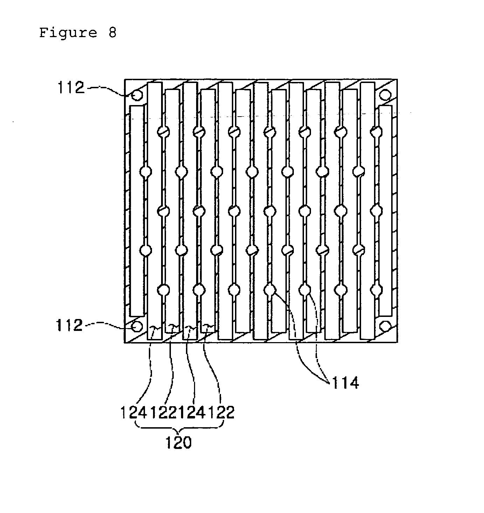

The flow channels 120 formed in the body 110 by the extruding process have different length in the second direction 104. That is, referring to Fig. 8, the second flow channels 124 are formed rather longer than the first flow channels 122 in the second direction 104, so that the upper and lower ends of the second flow channels 124 are formed closer to the side of the body 110 than the first flow channels 122. Fig. 9 illustrates the cross section of the body 110 which is subjected to the cutting process. The cutting process is carried out until the upper and lower portions of the second flow channels 124 are exposed outward, and the upper and lower portions of the first flow channels 122 are not exposed.

The second flowing fluid entered through the upper end of the body 110 is discharged from the lower end of the body 110 through the second flow channels 124. In this process, the second flowing fluid flows in the second flow channels 124 in the streamlined way with a zigzag pattern due to the protruding shape of the heat exchange fins 114 (see reference numeral 125).

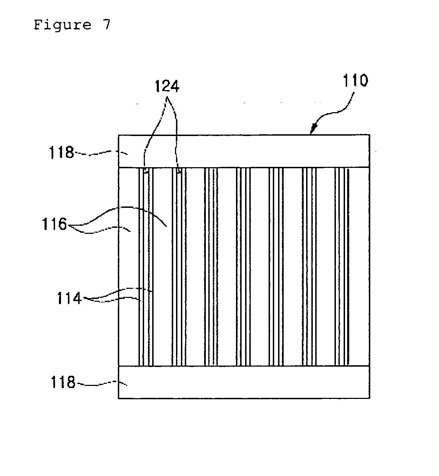

The method of manufacturing the heat exchanger according to one embodiment of the present invention will now be described with reference to Figs. 2 to 9.

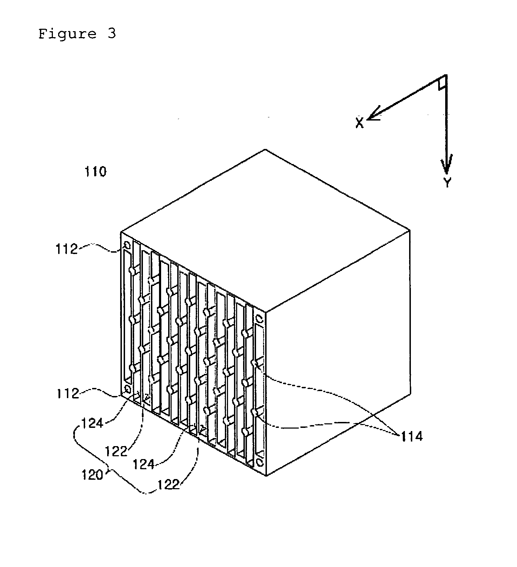

Firstly, the extruding process is carried out by extruding a molten shaping material into a mould having the shape corresponding to the body 110 of the present invention using a pump. The extruding process is classified into a positive extrusion method in which an extruding direction of the shaping material is the same as a direction of pressure applied from the exterior, and a negative extrusion method in which the extruding direction of the shaping material is opposite to the direction of pressure applied from the exterior. In the present invention, the plurality of flow channels 120 is evenly formed in the body 110 through the above-described simultaneous extruding process. Fig. 3 illustrates the body 110 formed by the extruding process, in which the flow channels 120 are formed to have the uniform shape in the first direction 102 (X-axis).

After the extruding process, the process of cutting the upper and lower ends of the body 110 is carried out. The upper and lower portions of the second flow channels 124 are exposed outward, while the upper and lower portions of the first flow channels 122 are not exposed. Fig. 4 illustrates the state in which the upper and lower sides of the body 110 are subjected to the cutting process. Through the process, the second flowing fluid enters the second flow channels 124 via the upper surface of the body 110.

After the process of cutting the body 110 is carried out, the cover members 130 are attached to the front and rear surfaces of the body 110. The cover member 130 prevents the second flowing fluid from being discharged from the body 110 in the first direction 102. This is achieved by forming the configuration in which the cover member 130 closes the portion of the second flow channels 124 which communicate with the front and rear surfaces of the body 110.

As described above, the present invention is characterized in that as the flowing fluids having thermal energy of the different temperatures flow in the flow channels formed in the body in the cross or perpendicular direction, the heat transfer can occur effectively. Further, the heat exchanger can be easily and rapidly manufactured with a simple method employing the above-described simultaneous extruding process once, the process of cutting the upper and lower ends of the body, and the process of attaching the cover member to the front and rear surfaces of the body when the body is formed, thereby improving its productivity and thus reducing the cost of menufacturing.

While the present invention has been described with respect to specific embodiments thereof, the present invention is not limited thereto. It will be apparent to those skilled in the art that various changes and modifications may be made without departing from the spirit and scope of the invention as defined in the following claims.

## Claims

1. A heat exchanger, in which heat transfer between a plurality of flowing fluids occurs, comprising:
a plurality of flow channels extending in a different direction so that the plurality of flowing fluids flows in a different direction.

2. The heat exchanger of claim 1, wherein the flow channels have a first flow channel serving as a passage for a first flowing fluid, and a second flow channel serving as a passage for a second flowing fluid, and
the heat transfer occurs between the first flowing fluid and the second flowing fluid in the cross direction in the heat exchanger.

3. The heat exchanger of claim 2, wherein the first flow channel and the second flow channel are alternatively disposed in a body.

4. The heat exchanger of claim 2, further comprising a pair of cover members which is fastened to both ends of the body in the first direction,
wherein the first flow channel serves as a passage of the first flowing fluid, which passes through the cover member, in the first direction.

5. The heat exchanger of claim 4, wherein the first and second flow channels are formed in the body in the first direction by an extruding process.

6. The heat exchanger of claim 2, wherein the first or second flow channel is provided with a heat exchange fin with a predetermined shape protruding from the flow channel.

7. The heat exchanger of claim 6, wherein the heat exchange fin is oppositely disposed in a staggered manner on an inner surface of either the first or second flow channel which is provided with the heat exchange fin.

8. The heat exchanger of claim 4, wherein the second flow channel is formed to communicate with a lateral surface of the body by a cutting process.

9. The heat exchanger of claim 4, wherein the cover member prevents the second flowing fluid, which flows through the second flow channel from the lateral surface of the body, from being discharged from the body in the first direction.

10. A method of manufacturing the heat exchanger set forth in any one of claims 1 to 9, comprising:
extruding a body so that some of a plurality of flow channels in any one direction are formed to have a different height;
cutting a lateral surface of the body in a direction different from the direction of the flow channel by a depth until a distal end of the flow channel having the different height is exposed outward; and
attaching a cover member to both ends of the front and rear surfaces of the body.

11. A food handler including the heat exchanger set forth in any one of claims 1 to 9, wherein heat transfer occurs between exhaust gas generated from a drying oven of the food handler and cold air supplied from an exterior flow in the heat exchanger.

12. A food handler including the heat exchanger manufactured by the method of claim 10.
